# EUROPEAN PATENT SPECIFICATION

(11) **EP 4 262 501 B1**
(45) Date of publication and mention of the grant of the patent: **02.10.2024**
(21) Application number: 23704382.3
(22) Date of filing: 11.01.2023
(51) Int. Cl.: A47K 13/00, C08L 67/06, A47K 13/02, C08L 61/28

(54) **COMPOSITE TOILET SEAT**
ZUSAMMENGESETZTER TOILETTENSITZ
SIÈGE DE TOILETTES COMPOSITE

(30) Priority: 11.01.2022 GB 202200275
(43) Date of publication of application: 25.10.2023
(73) Proprietor: Ellsi Limited, Scunthorpe, Lincolnshire DN15 8SL (GB)
(72) Inventor: DELANEY, Paul, Scunthorpe, Lincolnshire DN15 8SL (GB)
(74) Representative: Aldridge, Christopher Simon
(86) International application number: PCT/GB2023/050043
(87) International publication number: WO 2023/135414

(56) References cited:
- CN-A- 113 801 420
- JP-A- 2004 339 454
- JP-A- 2005 154 479
- JP-A- 2005 179 446
- JP-A- 2005 206 813
- JP-A- 2006 117 768
- JP-A- H05 321 313
- US-A1- 2006 182 975
- US-A1- 2011 269 907

## Description

### Field of the Invention

The invention relates to a toilet seat.

### Background to the Invention

Toilet seats are often made of wood, such as oak or walnut, resin, or plastics materials such as polypropylene or acrylonitrile butadiene styrene. An alternative to those materials is urea-formaldehyde, a thermosetting resin, which has become popular due to the ease with which it can be moulded, its non-toxic properties and its resistance to discolouration. A problem with urea-formaldehyde is that, being a thermosetting resin, it cannot be remoulded after is has been made into a toilet seat, thereby making it impractical for recycling into another product. Furthermore, urea-formaldehyde is not biodegradable and, when burned, it releases toxic components. Therefore, toilet seats made of urea-formaldehyde are particularly damaging to the environment.

Whilst wood is a more sustainable product, it can be expensive and is not always aesthetically suitable for some bathrooms.

JP2005179446 (Toray Industries) discloses over one hundred different products that might be manufactured from a resin composition.

CN113801420 (Pinghu) discloses a bathtub that is manufactured from resin, paper pulp, medical talcum powder, quartz stone, zinc stearate, a curing agent, antibacterial functional agent, an antioxidant and titanium dioxide.

US2006/182975 (Burbank) discloses a thermoset polymer substrate having applied thereto an ionizable compound and an electrostatic powder coating.

### Summary of the Invention

Accordingly, the present invention is directed to a toilet seat comprising at least one part, preferably a seat element and/or lid, that is constructed from a composite material comprising a combination of:
resin;
paper pulp;
titanium powder;
talcum powder; and
mould release agent and curing agent.

Thus, the toilet seat of the present invention is constructed from a composite material that has the required water and moisture resistance and is resistant to discolouration and is also considerably lighter in weight than wood toilet seats. Additionally, the toilet seat has a high degree of impact resistance in case items are dropped onto the toilet seat or it is, itself, dropped prior to installation. Additionally, over wood, the toilet seat of the present invention is able to be shaped with sharper, or cleaner, edges and is able to be made into slimmer designs, thereby providing more design freedom and allowing for aesthetically attractive toilets and/or bathrooms at a lower cost. Importantly, because the toilet seat is lighter and less prone to mechanical damage, it has a reduced carbon footprint, compared with comparable wooden or urea-formaldehyde products. It will be appreciated that the resin binds the dry materials to form a robust composite toilet seat. Hinges, fixing elements and other components may be over-moulded and/or incorporated into the seat material to allow the toilet seat to be fitted and to operate effectively. Alternatively, they may be applied once the seat portion has been created.

Preferably, the paper pulp is alpha cellulose paper pulp. Alpha cellulose contains the highest degree of polymerization and so is the most stable, which provides the toilet seat with strength and rigidity. The resulting toilet seat has the required degree of toughness to withstand impact and scratching. In addition to the toughness provided by the paper pulp, due to the high proportion of natural materials present in the toilet seat, the resulting product is substantially recyclable. A further benefit of the present invention is that the use of paper pulp may allow the toilet seat to be made from recycled materials. Whilst a paper pulp containing a lower degree of polymerization may be employed, the alpha cellulose is preferred.

The provision of titanium powder, particularly titanium dioxide, in the composition increases the resistance to ultraviolet radiation and, additionally, can act as a whitening agent to create a more aesthetically attractive unit.

The addition of talcum powder reduces the risk of fouling during production of the toilet seat.

The mould release agent and curing agent are present in the composition to assist with the shaping of the toilet seat and the removal of the toilet seat once formed in a mould.

It is advantageous that the toilet seat comprises the materials in the following ranges:
resin - 50% to 62%;
paper pulp - 36% to 44%;
titanium powder - 0.6% to 1.7%;
talcum powder - 1.3% to 2.7%; and
mould release agent and curing agent - 0.6% to 1.4%.

It is particularly advantageous that the materials are present in the composite toilet seat in the following ranges:
resin - 54% to 58%;
paper pulp - 38% to 42%;
titanium powder - 0.8% to 1.5%;
talcum powder - 1.5% to 2.5% ; and
mould release agent and curing agent - 0.8% to 1.2%.

It is advantageous that the resin is a thermosetting plastics material, and it is particularly advantageous that the resin comprises melamine formaldehyde resin. Whilst some resin is required in the present invention, with the additional elements, the resulting product is more readily mechanically broken down than comparable seats constructed from urea-formaldehyde.

The overall product is able to be provided with a gloss finish or a matt finish, depending upon what is required and/or desirable.

A varnish coating and/or lamina coating may be applied to the product to improve its aesthetic appearance.

In an alternative construction, it is envisaged that a toilet seat could comprise at least one part that is constructed from a composite material comprising a combination of:
resin;
silica dioxide (quartz sand);
fibreglass;
polystyrene; and
tert-Butyl peroxybenzoate.

Thus, the toilet seat of the present invention is constructed from a composite material that has the required mechanical resistance and is lighter in weight than wood toilet seats. Again, other elements, such as hinges or fixings may be incorporated into the product during manufacture. Preferably, the toilet seat has a coating of varnish to assist with resistance to impact and light. Resistance can also be obtained from the insulative properties of the quartz sand. Therefore, the composite toilet seat has a high degree of impact and light resistance without having too greater a hardness that it is uncomfortable. Additionally, the toilet seat of the present invention is able to be shaped with sharper, or cleaner, edges and is above to be made into slimmer designs, thereby providing more design freedom and allowing for aesthetically attractive toilets at a lower cost. Importantly, because the toilet seat is lighter and less prone to mechanical damage, it has a reduced carbon footprint. The resin binds the dry materials to form a robust composite toilet seat.

It is advantageous that at least one of the toilet seat part, preferably the seat and/or lid of the toilet seat, comprises the materials in the following ranges:
resin - 15% to 23%;
silica dioxide - 48% to 58%;
fibre glass - 12% to 20%;
polystyrene - 7% to 15%; and
tert-Butyl peroxybenzoate - 0.4% to 0.8%.

It is particularly advantageous that the materials are present in the following ranges:
resin - 17% to 21%;
silica dioxide - 50% to 56%;
fibre glass - 14% to 18%;
polystyrene - 9% to 13% ; and
tert-Butyl peroxybenzoate - 0.5% to 0.7%.

In a preferred arrangement, the toilet seat part comprises the following percentages, by weight or volume:
resin - 19%;
silica dioxide - 53.24%
fibre glass - 16%;
polystyrene - 11.18%; and
tert-Butyl peroxybenzoate - 0.58%.

In one arrangement, the seat portion, the mounting bar (that sits upon the biscuit of the toilet pan) and the lid of the toilet seat are all constructed from at least one of the materials set out herein. With the present invention, it is relatively simple and low cost to mould any style and shape of toilet seat.

It is preferable that the resin is unsaturated polyester resin. This is a relatively low-cost resin that is particularly useful for binding the composite materials together, particular as the resin is resistant to water and to chemicals.

Advantageously, the varnish that is applied to the toilet seat comprises alkyd resin. Thus, the toilet seat is coated with the varnish to provide a protective coating that increases the toilet seat's resistance to mechanical and thermal damage. Additionally, the resin varnish offers further resistance to moisture and ultra-violet light. It will be appreciated that other coatings may be applied, which may increase the impact resistance and/or chemical resistance and/or light resistance.

In a third arrangement, the toilet seat may have a composition comprising: resin and a mix of at least two of: paper pulp; silica dioxide (quartz sand); and fibreglass. The resin may be any of those described herein and that binds the materials together to provide the required degree of heat insulation and toughness to the toilet seat.

Additionally, the composition may further comprise one or more of: titanium powder; talcum powder; and mould release agent and curing agent; polystyrene; and tert-Butyl peroxybenzoate. As described herein, these materials provide further benefits to the toilet seat of the present invention, such as increasing the toughness and anti-fouling properties to the composition.

The toilet seat compositions described herein may provide microbial resistance, including, anti-bacterial properties, particularly in respect of Escherichia coli and Salmonella enterica subsp. Enterica.

In some arrangements, the toilet seat may comprise further materials, such as a bulking agent. The bulking agent may be in the form of plant-based materials, such as bamboo fibre. Such fibres assist with increasing the strength of the resultant product. It is preferred that the bulking agent is biodegradable, which may be derived from wood.

The present invention extends to a method of manufacturing a toilet seat as described herein.

### Brief description of the Figure

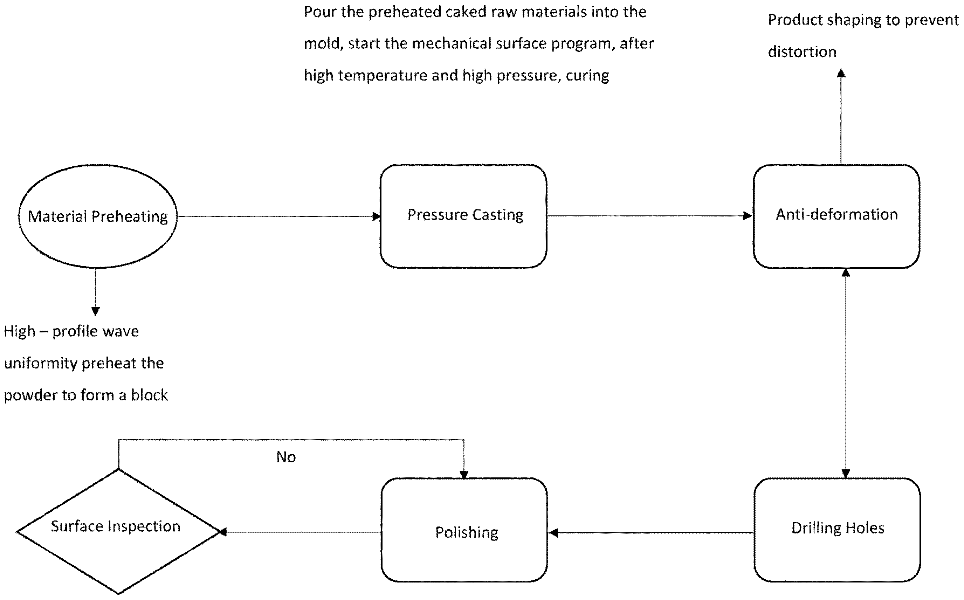

An example process for the manufacture of a toilet seat in accordance with the present invention is shown in Figure 1.

### Description of Exemplary Embodiment

As shown in Figure 1, the toilet seat of the present invention may be manufactured using known moulding process, for example, compression moulding or resin infusion moulding, although the former is preferred.

Thus, the materials are mixed in the appropriate ranges and heated and then the materials mix is compression moulded in a cavity mould, with the use of heat to cure the resin. It is preferable that the dry materials are in powder form and are mixed with one another prior to the addition of the resin, to ensure a good distribution of the component materials. At this stage, a colourant may be added to give the resulting product a particular colour.

Once the moulding process is complete, the composite structure is removed from the mould and, where needed, appropriate holes can be drilled therein. These may include holes for affixing hinges or fixings and any other holes or recesses that are required in the finished product.

The toilet seat is then passed through an anti-deformation process to reduce the risk of any deformation due to mechanical or thermal factors. Subsequent to the anti-deformation process, the toilet seat is polished and inspected to ensure that it meets with the quality required. At this stage, surface decoration, such as colourant, may be applied to the toilet seat, after which a surface coating of the varnish may be applied and cured to ensure that the toilet seat is provided with a further protective layer.

The toilet seat is inspected again to ensure that the varnish and underlying layers are not impaired or damaged before the toilet seat is sent for packing and transport.

In view of the composite material being consistently distributed, should the surface of the toilet seat become scratched, the appearance may still be consistent, unlike in some arrangements where the toilet seat comprises a coloured coating that, when scratched shows the core material thereunder.

Where the toilet seat is press-moulded, or compression-moulded, the tooling may allow for either a matt or gloss finish according to what is required. In such an arrangement, an insert may be applied to the tooling to give the desired finish.

The percentage values listed herein are, preferably, percentage by weight.

## Claims

1. A toilet seat having at least one part constructed from a composite material comprising:
resin;
paper pulp;
titanium powder;
talcum powder; and
mould release agent and curing agent.

2. A toilet seat according to claim 1, wherein the toilet seat part comprises the materials in the following ranges:
resin - 50% to 62%;
paper pulp - 36% to 44%;
titanium powder - 0.6% to 1.7%;
talcum powder - 1.3% to 2.7%; and
mould release agent and curing agent - 0.6% to 1.4%.

3. A toilet seat according to claim 1 or claim 2, wherein the toilet seat part comprises a bulking agent.

4. A toilet seat according to claim 3, wherein the bulking agent is bamboo.

5. A toilet seat according to any preceding claim, wherein the resin is melamine formaldehyde resin.

6. A toilet seat according to any preceding claim, wherein a varnish coating is applied to the composite part.

## Patentansprüche

1. Toilettensitz, der mindestens einen Teil aufweist, der aus einem Verbundmaterial hergestellt ist, das Folgendes umfasst:
Harz;
Papierzellstoff;
Titanpulver;
Talkumpuder; und
Formtrennmittel und Härtemittel.

2. Toilettensitz nach Anspruch 1, wobei der Toilettensitzteil die Materialien in den folgenden Bereichen umfasst:
Harz - 50% bis 62%;
Papierzellstoff - 36% bis 44%;
Titanpulver - 0,6% bis 1,7%;
Talkumpuder - 1,3% bis 2,7%; und
Formtrennmittel und Härtemittel - 0,6% bis 1,4%.

3. Toilettensitz nach Anspruch 1 oder Anspruch 2, wobei der Toilettensitzteil ein Füllmittel umfasst.

4. Toilettensitz nach Anspruch 3, wobei das Füllmittel Bambus ist.

5. Toilettensitz nach einem vorhergehenden Anspruch, wobei das Harz Melaminformaldehydharz ist.

6. Toilettensitz nach einem vorhergehenden Anspruch, wobei auf das Verbundteil ein Lackanstrich aufgetragen ist.

## Revendications

1. Siège de toilettes comportant au moins une partie construite à partir d'un matériau composite comprenant :
une résine ;
une pâte à papier;
une poudre de titane ;
une poudre de talc ; et
un agent de démoulage et un agent de durcissement.

2. Siège de toilettes selon la revendication 1, ladite partie de siège de toilettes comprenant les matériaux dans les plages suivantes :
résine - 50 % à 62 % ;
pâte à papier - 36 % à 44 % ;
poudre de titane - 0,6 % à 1,7 % ;
poudre de talc - 1,3 % à 2,7 % ; et
agent de démoulage et agent de durcissement - 0,6 % à 1,4 %.

3. Siège de toilettes selon la revendication 1 ou la revendication 2, ladite partie du siège de toilettes comprenant un agent gonflant.

4. Siège de toilettes selon la revendication 3, ledit agent gonflant étant du bambou.

5. Siège de toilettes selon une quelconque revendication précédente, ladite résine étant une résine mélamine-formaldéhyde.

6. Siège de toilettes selon une quelconque revendication précédente, un revêtement de vernis étant appliqué sur la pièce composite.
